(19) Europäisches Patentamt / European Patent Office / Office européen des brevets

(11) **EP 4 343 886 A1**

(12) **EUROPEAN PATENT APPLICATION**
published in accordance with Art. 153(4) EPC

(43) Date of publication:
**27.03.2024 Bulletin 2024/13**

(21) Application number: **22804363.4**

(22) Date of filing: **18.03.2022**

(51) International Patent Classification (IPC):
*H01M 4/36* (2006.01)    *H01M 4/525* (2010.01)
*H01M 4/62* (2006.01)

(52) Cooperative Patent Classification (CPC):
**H01M 4/36; H01M 4/525; H01M 4/62;** Y02E 60/10

(86) International application number:
**PCT/JP2022/012909**

(87) International publication number:
**WO 2022/244445 (24.11.2022 Gazette 2022/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.05.2021   JP 2021085522
20.05.2021   JP 2021085523**

(71) Applicant: **Panasonic Intellectual Property
Management Co., Ltd.
Osaka-shi, Osaka 540-6207 (JP)**

(72) Inventor: **SASAKI Izuru
Tokyo 103-0022 (JP)**

(74) Representative: **Eisenführ Speiser
Patentanwälte Rechtsanwälte PartGmbB
Gollierstraße 4
80339 München (DE)**

(54) **COATED CATHODE ACTIVE SUBSTANCE, CATHODE MATERIAL, AND BATTERY**

(57)    A coated positive electrode active material 103 according to one aspect of the present disclosure includes a positive electrode active material 101 and a coating layer 102 coating at least a portion of a surface of the positive electrode active material 101. A positive electrode material 1000 according to one aspect of the present disclosure includes the coated positive electrode active material 103 and a first solid electrolyte 104. A battery 2000 according to one aspect of the present disclosure includes: a positive electrode 201 including the positive electrode material 1000; a negative electrode 203; and an electrolyte layer 202 provided between the positive electrode 201 and the negative electrode 203.

1000

FIG.1

**Description**

TECHNICAL FIELD

The present disclosure relates to a coated positive electrode active material, a positive electrode material, and a battery.

BACKGROUND ART

Patent Literature 1 discloses a battery including a positive electrode including a sulfide solid electrolyte.
Patent Literature 2 discloses a battery including a positive electrode including a halide solid electrolyte.

CITATION LIST

Patent Literature

Patent Literature 1: WO 2007/004590 A1
Patent Literature 2: WO 2018/025582 A1

SUMMARY OF INVENTION

Technical Problem

In conventional arts, it has been desired to achieve both the thermal stability of the positive electrode and a low interfacial resistance of the positive electrode.

Solution to Problem

A coated positive electrode active material according to one aspect of the present disclosure includes:

a positive electrode active material; and
a coating layer coating at least a portion of a surface of the positive electrode active material, wherein
the coating layer includes a sulfide solid electrolyte and a halide solid electrolyte.

Advantageous Effects of Invention

According to the present disclosure, it is possible to achieve both the thermal stability of the positive electrode and a low interfacial resistance of the positive electrode.

BRIEF DESCRIPTION OF DRAWINGS

FIG. 1 is a cross-sectional view schematically showing the configuration of a positive electrode material according to Embodiment 1.
FIG. 2 is a cross-sectional view schematically showing the configuration of a battery according to Embodiment 2.
FIG. 3 is a graph showing the measurement results of the resistance for batteries of Examples 1 to 3 and Comparative Example 1.
FIG. 4 is a graph showing the measurement results of the exothermic onset temperature for the batteries of Examples 1 to 3 and Comparative Example 1.
FIG. 5 is a graph showing the measurement results of the resistance for batteries of Examples 4 to 6 and Comparative Example 2.
FIG. 6 is a graph showing the measurement results of the exothermic onset temperature for the batteries of Examples 4 to 6 and Comparative Example 2.

## DESCRIPTION OF EMBODIMENTS

(Findings on which the present disclosure is based)

Patent Literature 1 discloses an all-solid-state lithium battery including a positive electrode containing a sulfide solid electrolyte. Sulfide solid electrolytes have a low Young's modulus, that is, have an excellent deformability. Accordingly, using sulfide solid electrolytes tends to form an interface having a low interfacial resistance. On the other hand, sulfide solid electrolytes have a low thermal stability.

Patent Literature 2 discloses an all-solid-state lithium battery including a positive electrode containing a halide solid electrolyte, such as $Li_3YCl_6$ or $Li_3YBr_6$. Halide solid electrolytes have a high thermal stability. On the other hand, halide solid electrolytes have a high Young's modulus, that is, have a poor deformability. Accordingly, using halide solid electrolytes tends not to form an interface having a low interfacial resistance.

The thermal stability of the positive electrode containing a solid electrolyte is greatly affected not only by the thermal stability of the solid electrolyte itself but also by the reactivity of the solid electrolyte to oxygen released from the positive electrode. In the case where the positive electrode active material contains oxygen, the structure of the positive electrode active material becomes unstable along with charge, and consequently oxygen is sometimes released from the positive electrode active material. In particular, when a short circuit or the like causes a flow of an excessive current through a battery, the battery generates heat to heat the positive electrode active material. Consequently, oxygen is more prone to release from the positive electrode active material. When the solid electrolyte contained in the positive electrode reacts with oxygen to generate heat, the positive electrode active material is further heated by the heat of reaction serving as the heat source, thereby proceeding with an oxidation reaction of the solid electrolyte at an accelerated rate. Thus, an enhancement in the thermal stability of the positive electrode requires not only a high thermal stability of the solid electrolyte itself but also a low amount of heat generated by an oxidation reaction of the solid electrolyte with oxygen. As compared with sulfide solid electrolytes, halide solid electrolytes have an excellent thermal stability of the solid electrolytes themselves, and also have a low reactivity to oxygen. That is, halide solid electrolytes have a low amount of heat generated by an oxidation reaction. Accordingly, a positive electrode containing a halide solid electrolyte achieves a high thermal stability.

To achieve a low interfacial resistance of a positive electrode including a solid electrolyte, the positive electrode active material and the solid electrolyte are required to be in close contact with each other. All-solid-state batteries are manufactured typically by applying a load to a positive electrode to bring the positive electrode active material and a solid electrolyte into contact with each other. At this time, the solid electrolyte having a higher deformability is in closer contact with the positive electrode, even with the same load applied. Sulfide solid electrolytes typically have a low Young's modulus and an excellent deformability, as compared with halide solid electrolytes. That is, sulfide solid electrolytes facilitate a closer contact between the positive electrode active material and the solid electrolyte. Accordingly, a positive electrode including a sulfide solid electrolyte achieves a low interfacial resistance.

The present inventors have made intensive studies in order to achieve both the thermal stability of the positive electrode and a low interfacial resistance of the positive electrode. As a result, the present inventors have found a coated positive electrode active material including a positive electrode active material and a coating layer coating at least a portion of a surface of the positive electrode active material, wherein the coating layer includes a sulfide solid electrolyte and a halide solid electrolyte. Using such a coated positive electrode active material achieves, in the positive electrode, a low interfacial resistance owing to the sulfide solid electrolyte included in the coating layer and a high thermal stability owing to the halide solid electrolyte included in the coating layer.

(Overview of one aspect according to the present disclosure)

A coated positive electrode active material according to a first aspect of the present disclosure includes:

a positive electrode active material; and
a coating layer coating at least a portion of a surface of the positive electrode active material, wherein
the coating layer includes a sulfide solid electrolyte and a halide solid electrolyte.

The above configuration achieves, in the positive electrode, a low interfacial resistance owing to the sulfide solid electrolyte included in the coating layer and a high thermal stability owing to the halide solid electrolyte included in the coating layer. That is, it is possible to achieve both the thermal stability of the positive electrode and a low interfacial resistance of the positive electrode.

In a second aspect of the present disclosure, for example, in the coated positive electrode active material according to the first aspect, a proportion of a volume of the halide solid electrolyte to a volume of the coating layer may be 60% or less. According to the above configuration, it is possible to achieve both the thermal stability of the positive electrode and a low interfacial resistance of the positive electrode.

In a third aspect of the present disclosure, for example, in the coated positive electrode active material according to the first or second aspect, a proportion of a volume of the halide solid electrolyte to a volume of the coating layer may be 40% or less. According to the above configuration, it is possible to achieve both the thermal stability of the positive electrode and a low interfacial resistance of the positive electrode.

In a fourth aspect of the present disclosure, for example, in the coated positive electrode active material according to any one of the first to third aspects, the halide solid electrolyte may be represented by the following composition formula (1)

$$Li_{\alpha}M_{\beta}X_{\gamma} \dots \qquad \text{Formula (1)}$$

where $\alpha$, $\beta$, and $\gamma$ are each independently a value greater than 0, M includes at least one element selected from the group consisting of metalloid elements and metal elements except Li, and X includes at least one selected from the group consisting of F, Cl, Br, and I. According to the above configuration, it is possible to further enhance the ionic conductivity of the halide solid electrolyte, and further reduce the interfacial resistance of the positive electrode.

In a fifth aspect of the present disclosure, for example, in the coated positive electrode active material according to the fourth aspect, the composition formula (1) may satisfy $2.5 \le \alpha \le 3$, $1 \le \beta \le 1.1$, and $\gamma = 6$. According to the above configuration, it is possible to further enhance the ionic conductivity of the halide solid electrolyte, and further reduce the interfacial resistance of the positive electrode.

In a sixth aspect of the present disclosure, for example, in the coated positive electrode active material according to the fourth or fifth aspect, in the composition formula (1), M may include yttrium. According to the above configuration, it is possible to further enhance the ionic conductivity of the halide solid electrolyte, and further reduce the interfacial resistance of the positive electrode.

In a seventh aspect of the present disclosure, for example, in the coated positive electrode active material according to any one of the first to sixth aspects, the coating layer may be a single layer. According to the above configuration, it is possible to suppress an increase in the manufacturing cost of the coated positive electrode active material, and a desired effect is easily obtained.

In an eighth aspect of the present disclosure, for example, in the coated positive electrode active material according to any one of the first to seventh aspects, the coating layer may include a mixture of the sulfide solid electrolyte and the halide solid electrolyte. According to the above configuration, a desired effect can be obtained for the entire coating layer.

A positive electrode material according to a ninth aspect of the present disclosure includes:

the coated positive electrode active material according to any one of the first to eighth aspects; and
a first solid electrolyte.

According to the above configuration, it is possible to achieve both the thermal stability of the positive electrode and a low interfacial resistance of the positive electrode.

In a tenth aspect of the present disclosure, for example, in the positive electrode material according to the ninth aspect, the first solid electrolyte may include at least one selected from the group consisting of a halide solid electrolyte, a sulfide solid electrolyte, an oxide solid electrolyte, a polymer solid electrolyte, and a complex hydride solid electrolyte. According to the above configuration, it is possible to enhance the thermal stability of the positive electrode. Moreover, it is possible to reduce the interfacial resistance of the positive electrode.

A battery according to an eleventh aspect of the present disclosure includes:

a positive electrode including the positive electrode material according to the ninth or tenth aspect;
a negative electrode; and
an electrolyte layer provided between the positive electrode and the negative electrode.

According to the above configuration, it is possible to achieve both the thermal stability of the positive electrode and a low interfacial resistance of the positive electrode.

Embodiments of the present disclosure will be described below with reference to the drawings.

(Embodiment 1)

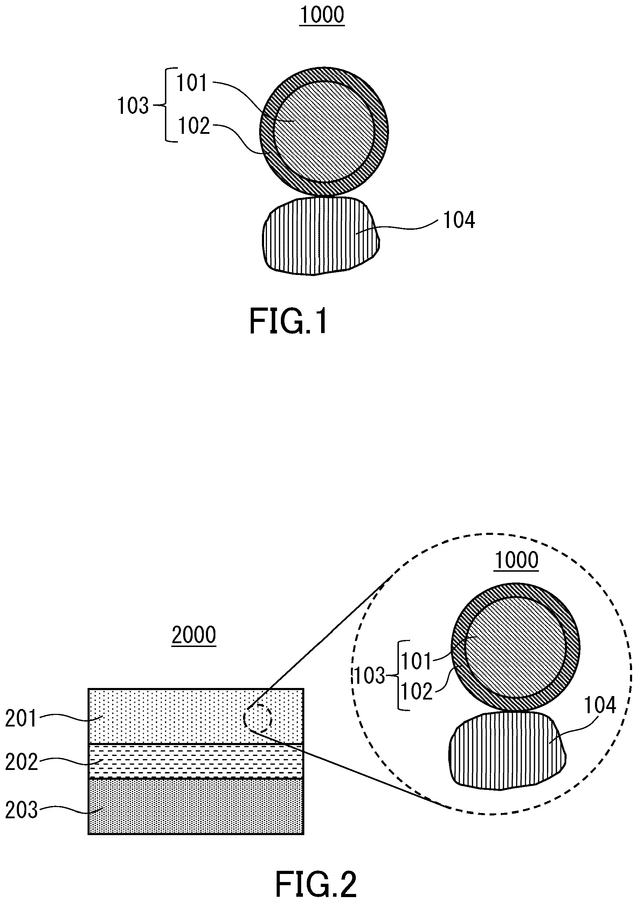

FIG. 1 is a cross-sectional view schematically showing the configuration of a positive electrode material 1000 according to Embodiment 1. The positive electrode material 1000 according to Embodiment 1 includes a coated positive electrode active material 103. The coated positive electrode active material 103 according to Embodiment 1 will be described with reference to FIG. 1.

[Coated positive electrode active material]

The coated positive electrode active material 103 according to Embodiment 1 includes a positive electrode active material 101 and a coating layer 102. The coating layer 102 coats at least a portion of the surface of the positive electrode active material 101.
The coating layer 102 is in direct contact with the positive electrode active material 101.
The material constituting the coating layer 102 is hereinafter referred to as a "coating material". The coated positive electrode active material 103 according to Embodiment 1 includes the positive electrode active material 101 and the coating material. The coating material is present on at least a portion of the surface of the positive electrode active material 101 thus to form the coating layer 102.
The coating layer 102 may uniformly coat the positive electrode active material 101. According to the above configuration, since the positive electrode active material 101 and the coating layer 102 are in close contact with each other, it is possible to achieve both the thermal stability of the positive electrode and a low interfacial resistance of the positive electrode.
The coating layer 102 may coat only a portion of the surface of the positive electrode active material 101. In this case, particles of the positive electrode active material 101 are in direct contact with each other through their portions that are not coated with the coating layer 111. Consequently, the electronic conductivity between the particles of the positive electrode active material 101 is enhanced. This enables a battery to operate at a high output.
Coating the positive electrode active material 101 with the coating layer 102 suppresses formation of an oxide film due to oxidative decomposition of a different solid electrolyte during charge of a battery. This enhances the charge and discharge efficiency of the battery. The different solid electrolyte is, for example, a first solid electrolyte 104 described later.

(Coating layer)

The coating layer 102 includes a sulfide solid electrolyte and a halide solid electrolyte.
The above configuration achieves, in the positive electrode, a low interfacial resistance owing to the sulfide solid electrolyte included in the coating layer 102 and a high thermal stability owing to the halide solid electrolyte included in the coating layer 102. The present inventors have also found that the characteristics of the positive electrode, namely, the thermal stability and the interfacial resistance, are strongly affected by the structure of the vicinity of the interface at which the positive electrode active material 101 and the different solid electrolyte are in contact with each other. The above configuration further significantly enhances the thermal stability and reduces the interfacial resistance, as compared with a simple configuration in which the different solid electrolyte includes a sulfide solid electrolyte and a halide solid electrolyte.
In the present embodiment, the coating layer 102 is a single layer. According to the above configuration, it is possible to suppress an increase in the manufacturing cost of the coated positive electrode active material 103, and a desired effect is easily obtained.
The coating layer 102 may be composed of a plurality of layers. In this case, at least one of the plurality of coating layers 102 may include the sulfide solid electrolyte and the halide solid electrolyte. The plurality of coating layers 102 may each include the sulfide solid electrolyte and the halide solid electrolyte.
In the present embodiment, the coating layer 102 includes a mixture of the sulfide solid electrolyte and the halide solid electrolyte. According to the above configuration, a desired effect can be obtained for the entire coating layer 102.
In the present embodiment, the coating layer 102 has a substantially homogenous composition. That is, the sulfide solid electrolyte and the halide solid electrolyte are homogeneously mixed together in the coating layer 102. According to the above configuration, a desired effect can be obtained for the entire coating layer 102.
The halide solid electrolyte may be free of sulfur. According to the above configuration, generation of hydrogen sulfide gas can be suppressed. Consequently, it is possible to achieve a battery with an enhanced safety.
The halide solid electrolyte is represented, for example, by the following composition formula (1).

$$Li_\alpha M_\beta X_\gamma \ ... \qquad \text{Formula (1)}$$

Here, $\alpha$, $\beta$, and $\gamma$ are each independently a value greater than 0. M includes at least one element selected from the group consisting of metalloid elements and metal elements except Li. X includes at least one selected from the group consisting of F, Cl, Br, and I.
In the present disclosure, the "metalloid elements" refer to B, Si, Ge, As, Sb, and Te. The "metal elements" refer to all the elements included in Groups 1 to 12 of the periodic table except hydrogen and all the elements included in Groups 13 to 16 of the periodic table except B, Si, Ge, As, Sb, Te, C, N, P, O, S, and Se. That is, the "metalloid elements" and the "metal elements" are each a group of elements that can become cations when forming an inorganic compound with a halogen element.

The halide solid electrolyte represented by the composition formula (1) has a high ionic conductivity as compared with a halide solid electrolyte, such as LiI, consisting of Li and a halogen element. Consequently, according to the halide solid electrolyte represented by the composition formula (1), it is possible to further enhance the ionic conductivity of the halide solid electrolyte, and further reduce the interfacial resistance of the positive electrode.

In the composition formula (1), M may be at least one element selected from the group consisting of metalloid elements and metal elements except Li.

In the composition formula (1), X may be at least one selected from the group consisting of F, Cl, Br, and I.

The composition formula (1) may satisfy $2.5 \leq \alpha \leq 3$, $1 \leq \beta \leq 1.1$, and $\gamma = 6$. According to the above configuration, it is possible to further enhance the ionic conductivity of the halide solid electrolyte, and further reduce the interfacial resistance of the positive electrode.

In the composition formula (1), M may include Y (= yttrium). That is, the halide solid electrolyte may include Y as a metal element. According to the above configuration, it is possible to further enhance the ionic conductivity of the halide solid electrolyte, and further reduce the interfacial resistance of the positive electrode.

The halide solid electrolyte including Y may be, for example, a compound represented by the composition formula $Li_aMe_bY_cX_6$. Here, $a + mb + 3c = 6$ and $c > 0$ are satisfied. Me is at least one element selected from the group consisting of the metalloid elements and the metal elements except Li and Y The symbol m represents the valence of the element Me. X is at least one selected from the group consisting of F, Cl, Br, and I.

Me may be, for example, at least one selected from the group consisting of Mg, Ca, Sr, Ba, Zn, Sc, Al, Ga, Bi, Zr, Hf, Ti, Sn, Ta, and Nb.

According to the above configuration, it is possible to further enhance the ionic conductivity of the halide solid electrolyte.

For example, the following materials can be used as the halide solid electrolyte. According to the following configuration, it is possible to further enhance the ionic conductivity of the halide solid electrolyte, and further reduce the interfacial resistance of the positive electrode.

The halide solid electrolyte may be a material represented by the following composition formula (A1).

$$Li_{6-3d}Y_dX_6 ... \qquad \text{Formula (A1)}$$

In the composition formula (A1), X is at least one selected from the group consisting of F, Cl, Br, and I. Moreover, $0 < d < 2$ is satisfied

The halide solid electrolyte may be a material represented by the following composition formula (A2).

$$Li_3YX_6 ... \qquad \text{Formula (A2)}$$

In the composition formula (A2), X is at least one selected from the group consisting of F, Cl, Br, and I.

The halide solid electrolyte may be a material represented by the following composition formula (A3).

$$Li_{3-3\delta}Y_{1+\delta}Cl_6 ... \qquad \text{Formula (A3)}$$

In the composition formula (A3), $0 < \delta \leq 0.15$ is satisfied.

The halide solid electrolyte may be a material represented by the following composition formula (A4).

$$Li_{3-3\delta}Y_{1+\delta}Br_6 ... \qquad \text{Formula (A4)}$$

In the composition formula (A4), $0 < \delta \leq 0.25$ is satisfied.

The halide solid electrolyte may be a material represented by the following composition formula (A5).

$$Li_{3-3\delta+a}Y_{1+\delta-a}Me_aCl_{6-x-y}Br_xI_y ... \qquad \text{Formula (A5)}$$

In the composition formula (A5), Me includes at least one selected from the group consisting of Mg, Ca, Sr, Ba, and Zn. Me may be at least one selected from the group consisting of Mg, Ca, Sr, Ba, and Zn.

In the composition formula (A5), $-1 < \delta < 2$, $0 < a < 3$, $0 < (3 - 3\delta + a)$, $0 < (1 + \delta - a)$, $0 \leq x \leq 6$, $0 \leq y \leq 6$, and $(x + y) \leq 6$ are satisfied.

The halide solid electrolyte may be a material represented by the following composition formula (A6).

$$Li_{3-3\delta}Y_{1+\delta-a}Me_aCl_{6-x-y}Br_xI_y \ldots \qquad \text{Formula (A6)}$$

In the composition formula (A6), Me includes at least one selected from the group consisting of Al, Sc, Ga, and Bi. Me may be at least one selected from the group consisting of Al, Sc, Ga, and Bi.

In the composition formula (A6), $-1 < \delta < 1$, $0 < a < 2$, $0 < (1 + \delta - a)$, $0 \leq x \leq 6$, $0 \leq y \leq 6$, and $(x + y) \leq 6$ are satisfied.

The halide solid electrolyte may be a material represented by the following composition formula (A7).

$$Li_{3-3\delta-a}Y_{1+\delta-a}Me_aCl_{6-x-y}Br_xI_y \ldots \qquad \text{Formula (A7)}$$

In the composition formula (A7), Me includes at least one selected from the group consisting of Zr, Hf, and Ti. Me may be at least one selected from the group consisting of Zr, Hf, and Ti.

In the composition formula (A7), $-1 < \delta < 1$, $0 < a < 1.5$, $0 < (3 - 3\delta - a)$, $0 < (1 + \delta - a)$, $0 \leq x \leq 6$, $0 \leq y \leq 6$, and $(x + y) \leq 6$ are satisfied.

The halide solid electrolyte may be a material represented by the following composition formula (A8).

$$Li_{3-3\delta-2a}Y_{1+\delta-a}Me_aCl_{6-x-y}Br_xI_y \ldots \qquad \text{Formula (A8)}$$

In the composition formula (A8), Me includes at least one selected from the group consisting of Ta and Nb. Me may be at least one selected from the group consisting of Ta and Nb.

In the composition formula (A8), $-1 < \delta < 1$, $0 < a < 1.2$, $0 < (3 - 3\delta - 2a)$, $0 < (1 + \delta - a)$, $0 \leq x \leq 6$, $0 \leq y \leq 6$, and $(x + y) \leq 6$ are satisfied.

The halide solid electrolyte that can be used is more specifically, for example, $Li_3YX_6$, $Li_2MgX_4$, $Li_2FeX_4$, $Li(Al, Ga,In)X_4$, or $Li_3(Al,Ga,In)X_6$. Here, X is at least one selected from the group consisting of F, Cl, Br, and I.

In the present disclosure, an expression "(A,B,C)" in a chemical formula means "at least one selected from the group consisting of A, B, and C". For example, "(Al,Ga,In)" is synonymous with "at least one selected from the group consisting of Al, Ga, and In". The same applies to other elements.

The halide solid electrolyte may be a compound including Li, M2, X2, and O (oxygen). Here, M2 includes, for example, at least one selected from the group consisting of Nb and Ta. Moreover, X2 is at least one selected from the group consisting of F, Cl, Br, and I.

The compound including Li, M2, X2 and O (oxygen) may be represented, for example, by the following composition formula (2).

$$Li_xM2O_yX2_{5+x-2y} \ldots \qquad \text{Formula (2)}$$

Here, x may satisfy $0.1 < x < 7.0$, and y may satisfy $0.4 < y < 1.9$. According to the above configuration, the halide solid electrolyte has a high ionic conductivity. This halide solid electrolyte enables a battery to exhibit an excellent charge and discharge efficiency.

Examples of the sulfide solid electrolyte include $Li_2S\text{-}P_2S_5$, $Li_2S\text{-}SiS_2$, $Li_2S\text{-}B_2S_3$, $Li_2S\text{-}GeS_2$, $Li_{3.25}Ge_{0.25}P_{0.75}S_4$, and $Li_{10}GeP_2S_{12}$. Moreover, sulfide solid electrolytes having an argyrodite structure typified by $Li_6PS_5Cl$, $Li_6PS_5Br$, $Li_6PS_5I$, and the like can be used. To these sulfide solid electrolytes, $LiX$, $Li_2O$, $MO_q$, $Li_pMO_q$, or the like may be added. Here, X is at least one selected from the group consisting of F, Cl, Br, and I. Moreover, M is at least one selected from the group consisting of P, Si, Ge, B, Al, Ga, In, Fe, and Zn. The symbols p and q are each a natural number. One or two or more sulfide solid electrolytes selected from the above materials can be used.

According to the above configuration, the ionic conductivity of the sulfide solid electrolyte can be further enhanced. Consequently, the charge and discharge efficiency of a battery can be further enhanced.

In the coated positive electrode active material 103 according to Embodiment 1, the proportion of the volume of the halide solid electrolyte to the volume of the coating layer 102 may be 60% or less. The proportion of the volume of the halide solid electrolyte to the volume of the coating layer 102 may be 40% or less. According to the above configuration, it is possible to achieve both the thermal stability of the positive electrode and a low interfacial resistance of the positive electrode.

In the coated positive electrode active material 103 according to Embodiment 1, the proportion of the volume of the halide solid electrolyte to the volume of the coating layer 102 may be 5% or more. In the case where the proportion of the volume of the halide solid electrolyte to the volume of the coating layer 102 is 5% or more, the probability of a contact between the positive electrode active material 101 and the sulfide solid electrolyte included in the coating layer 102 is lowered, and consequently a high thermal stability can be maintained.

The proportion of the volume of the halide solid electrolyte to the volume of the coating layer 102 can be calculated, for example, by the following method. The coated positive electrode active material 103 is dissolved in an acid or the like to obtain a solution. Alternatively, only the coating layer 102 of the coated positive electrode active material 103 is dissolved in a highly polar organic solvent or the like to obtain a solution. The solution obtained is analyzed by ICP emission spectroscopy or ion chromatography to specify the element ratio in the coating layer 102. From the element ratio specified, the proportion of the volume of the halide solid electrolyte to the volume of the coating layer 102 can be calculated.

The coating layer 102 may have a thickness of, for example, 1 nm or more and 500 nm or less.

In the case where the coating layer 102 has a thickness of 1 nm or more, the positive electrode active material 101 and the coating layer 102 are favorably in close contact with each other. Consequently, it is possible to achieve both the thermal stability of the positive electrode and a low interfacial resistance of the positive electrode.

Moreover, in the case where the coating layer 102 has a thickness of 500 nm or less, the internal resistance of a battery due to the thickness of the coating layer 102 can be sufficiently reduced. Consequently, the energy density of the battery can be enhanced.

The method of measuring the thickness of the coating layer 102 is not particularly limited. For example, the thickness of the coating layer 102 can be determined by direct observation with a transmission electron microscope or the like. Alternatively, the thickness of the coating layer 102 can be determined from variations in the spectrum derived from the active material obtained by XPS during which the coating layer 102 is etched by Ar sputtering.

(Positive electrode active material)

The positive electrode active material 101 includes a material having properties of occluding and releasing metal ions (e.g., lithium ions). The positive electrode active material 101 that can be used is, for example, a lithium-containing transition metal oxide, a transition metal fluoride, a polyanion material, a fluorinated polyanion material, a transition metal sulfide, a transition metal oxysulfide, or a transition metal oxynitride. In particular, in the case where the lithium-containing transition metal oxide is used as the positive electrode active material 101, it is possible to reduce the manufacturing cost and enhance the average discharge voltage. Examples of the lithium-containing transition metal oxide include $Li(Ni,Co,Mn)O_2$, $Li(Ni,Co,Al)O_2$, $Li(NiCoMn)O_2$, $Li(NiCoAl)O_2$, and $LiCoO_2$.

The positive electrode active material 101 may include Ni, Co, and Mn. The positive electrode active material 101 may include lithium nickel manganese cobalt oxide (i.e., NMC). The positive electrode active material 101 may be NMC. For example, the positive electrode active material 101 may be $Li(NiCoMn)O_2$. According to the above configuration, it is possible to further enhance the energy density and the charge and discharge efficiency of a battery.

The positive electrode active material 101 may include Ni, Co, and Al. The positive electrode active material 101 may include lithium nickel cobalt aluminum oxide (i.e., NCA). The positive electrode active material 101 may be NCA. For example, the positive electrode active material 101 may be $Li(NiCoAl)O_2$. According to the above configuration, it is possible to further enhance the energy density and the charge and discharge efficiency of a battery.

The shape of the positive electrode active material 101 according to Embodiment 1 is not particularly limited. The shape of the positive electrode active material 101 may be, for example, acicular, spherical, or ellipsoidal. The shape of the positive electrode active material 101 may be, for example, particulate.

The mass ratio of the coating layer 102 to the positive electrode active material 101 may be 0.01% or more and 30% or less. In the case where the mass ratio of the coating layer 102 to the positive electrode active material 101 is 0.01% or more, the positive electrode active material 101 and the coating layer 102 are favorably in close contact with each other. Consequently, the interfacial resistance is reduced. In the case where the mass ratio of the coating layer 102 to the positive electrode active material 101 is 30% or less, the coating layer 102 is not excessively thick. Consequently, the internal resistance of a battery can be sufficiently reduced. Therefore, the energy density of the battery can be enhanced.

The coating layer 102 may coat 30% or more, 60% or more, or 90% or more of the surface of the positive electrode active material 101. The coating layer 102 may coat substantially the entire surface of the positive electrode active material 101.

At least a portion of the surface of the positive electrode active material 101 may be coated with a coating material different from the coating material constituting the coating layer 102. Examples of such a coating material include a sulfide solid electrolyte, an oxide solid electrolyte, and a halide solid electrolyte. The sulfide solid electrolyte and the halide solid electrolyte that are used as such a coating material may be those exemplified as the coating material constituting the coating layer 102. Examples of the oxide solid electrolyte that is used as such a coating material include a Li-Nb-O compound, such as $LiNbOs$, a Li-B-O compound, such as $LiBO_2$ or $LisBOs$, a Li-Al-O compound, such as $LiAlO_2$, a Li-Si-O compound, such as $Li_4SiO_4$, a Li-Ti-O compound, such as $Li_2SO_4$ or $Li_4Ti_5O_{12}$, a Li-Zr-O compound, such as $Li_2ZrO_3$, a Li-Mo-O compound, such as $Li_2MoO_3$, a Li-V-O compound, such as $LiV_2O_5$, a Li-W-O compound, such as $Li_2WO_4$, and a Li-P-O compound, such as $Li_3PO_4$. According to the above configuration, the oxidation resistance of the positive electrode material 1000 can be further enhanced. Consequently, it is possible to suppress an increase in the internal resistance of a battery during charge.

<Method of manufacturing sulfide solid electrolyte>

The sulfide solid electrolyte included in the coating layer 102 can be manufactured, for example, by the following method.

Sulfide raw material powders are prepared so as to obtain the blending ratio of a target composition, and are mixed together. For example, to produce $Li_2S-P_2S_5$, sulfide raw material powders $Li_2S$ and $P_2S_5$ are prepared in a molar ratio of 75:25.

The raw material powders are mixed well together, and then mixed, pulverized, and reacted together by mechanochemical milling. Alternatively, the raw material powders may be mixed well together and then sintered in a vacuum.

Thus, a glass-ceramic sulfide solid electrolyte $Li_2S-P_2S_5$ is obtained.

<Method of manufacturing halide solid electrolyte>

The halide solid electrolyte included in the coating layer 102 can be manufactured, for example, by the following method.

Binary halide raw material powders are prepared so as to obtain the blending ratio of a target composition, and are mixed together. For example, to produce $Li_3YCl_6$, binary halide raw material powders LiCl and $YCl_3$ are prepared in a molar ratio of 3:1.

At this time, the type of the raw material powders can be selected to determine "M", "Me", and "X" in the above composition formulae. Moreover, the type of the raw material powders, the blending ratio, and the synthesis process can be adjusted to adjust the values "$\alpha$", "$\beta$", "$\gamma$", "d", "$\delta$", "a", "x", and "y" in the above composition formulae.

The raw material powders are mixed well together, and then mixed, pulverized, and reacted together by mechanochemical milling. Alternatively, the raw material powders may be mixed well together and then sintered in a vacuum.

Thus, a halide solid electrolyte $Li_3YCl_6$ is obtained.

In the halide solid electrolyte, the structure of the crystal phase (i.e., crystal structure) can be determined by adjusting the method and conditions for reaction between the raw material powders.

<Method of manufacturing coated positive electrode active material>

The coated positive electrode active material 103 can be manufactured, for example, by the following method.

As the coating material, a powder of a sulfide solid electrolyte and a powder of a halide solid electrolyte are prepared. A powder of the positive electrode active material 101 and a powder of the coating material are mixed together in an appropriate ratio to obtain a mixture. The mixture is subjected to a milling process to impart a mechanical energy to the mixture. For the milling process, a mixer such as a ball mill can be used. To suppress oxidation of the material, the milling process may be performed in a dry atmosphere and an inert atmosphere.

The coated positive electrode active material 103 may be manufactured by a dry particle composing method. The process by the dry particle composing method includes imparting a mechanical energy generated by at least one selected from the group consisting of impact, compression, and shear to the positive electrode active material 101 and the coating material. The positive electrode active material 101 and the coating material are mixed together in an appropriate ratio.

The apparatus for use in the method of manufacturing the coated positive electrode active material 103 is not particularly limited, and can be an apparatus capable of imparting a mechanical energy generated by impact, compression, shear, etc. to the mixture of the positive electrode active material 101 and the coating material. Examples of the apparatus capable of imparting a mechanical energy include a ball mill and a compression shear type processing apparatus (particle composing machine), such as "MECHANO FUSION" (manufactured by Hosokawa Micron Corporation) or "NOBILTA" (manufactured by Hosokawa Micron Corporation).

"MECHANO FUSION" is a particle composing machine using a dry mechanical composing technology of imparting a high mechanical energy to a plurality of different material particles. MECHANO FUSION manufactures composite particles by imparting a mechanical energy generated by compression, shear, friction, etc. to powdery raw materials charged between the rotating vessel and the press head.

"NOBILTA" is a particle composing machine using a dry mechanical composing technology developed from the particle composing technology in order to perform composing using nanoparticles as the raw material. NOBILTA manufactures composite particles by imparting a mechanical energy generated by impact, compression, and shear to a plurality of raw material powders.

In "NOBILTA", inside a horizontal cylindrical mixing vessel, a rotor is disposed with a predetermined gap from the inner wall of the mixing vessel, and the rotor rotates at a high speed to repeat processing of forcibly passing raw material powders through the gap a plurality of times. This exerts the force of impact, compression, and shear on the mixture, and thus composite particles of the positive electrode active material 101 and the coating material can be produced. The conditions such as the rotation speed of the rotor, the processing time, and the charge amount can be appropriately adjusted.

[Positive electrode material]

The positive electrode material 1000 according to Embodiment 1 includes the first solid electrolyte 104 in addition to the coated positive electrode active material 103. The shape of the first solid electrolyte 104 is, for example, particulate. According to the first solid electrolyte 104, a high ionic conductivity in the positive electrode material 1000 can be achieved.

The positive electrode active material 101 is separated from the first solid electrolyte 104 by the coating layer 102. The positive electrode active material 101 may not be in direct contact with the first solid electrolyte 104. According to the above configuration, the oxidation resistance of the positive electrode material 1000 is further enhanced. Consequently, it is possible to suppress an increase in the internal resistance of a battery during charge.

(First solid electrolyte)

The first solid electrolyte 104 is a bulk solid electrolyte. The first solid electrolyte 104 includes at least one selected from the group consisting of a halide solid electrolyte, a sulfide solid electrolyte, an oxide solid electrolyte, a polymer solid electrolyte, and a complex hydride solid electrolyte. According to the above configuration, the thermal stability of the positive electrode can be further enhanced. Moreover, the interfacial resistance of the positive electrode can be reduced. Halide solid electrolytes have a high ionic conductivity and a high thermal stability. Accordingly, in the case where the first solid electrolyte 104 includes a halide solid electrolyte, the thermal stability of the positive electrode can be even further enhanced. Sulfide solid electrolytes have a high ionic conductivity, a low Young's modulus, and an excellent deformability. Accordingly, in the case where the first solid electrolyte 104 includes a sulfide solid electrolyte, the coated positive electrode active material 103 and the first solid electrolyte 104 tend to be in closer contact with each other. Consequently, the interfacial resistance of the positive electrode can be further reduced. Moreover, contact between two solid electrolytes having greatly different structures can generate a high resistance at the interface therebetween. Accordingly, in the case where both the coating layer 102 and the first solid electrolyte 104 include a halide solid electrolyte or include a sulfide solid electrolyte, lithium ions are easily transferred at the interface between the coating layer 102 and the first solid electrolyte 104. Consequently, the interfacial resistance of the positive electrode can be reduced.

The halide solid electrolyte that can be used is any of the halide solid electrolytes described for the coating layer 102. The sulfide solid electrolyte that can be used is any of the sulfide solid electrolytes described for the coating layer 102.

The oxide solid electrolyte that can be used is, for example, a NASICON solid electrolyte typified by $LiTi_2(PO_4)_3$ and element-substituted substances thereof, a (LaLi)TiOs-based perovskite solid electrolyte, a LISICON solid electrolyte typified by $Li_{14}ZnGe_4O_{16}$, $Li_4SiO_4$, and $LiGeO_4$ and element-substituted substances thereof, a garnet solid electrolyte typified by $Li_7La_3Zr_2O_{12}$ and element-substituted substances thereof, $Li_3PO_4$ and N-substituted substances thereof, or glass or glass ceramics based on a Li-B-O compound, such as $LiBO_2$ or LisBOs, to which $Li_2SO_4$, $Li_2CO_3$, or the like is added. One or two or more oxide solid electrolytes selected from the above materials can be used.

In the present disclosure, the term "solid" in the "polymer solid electrolyte" expresses a concept including a gel.

The polymer solid electrolyte that can be used is, for example, a compound of a polymer compound and a lithium salt. The polymer compound may have an ethylene oxide structure. The polymer compound having an ethylene oxide structure can contain a large amount of a lithium salt. Consequently, the ionic conductivity can be further enhanced. The lithium salt that can be used is $LiPF_6$, $LiBF_4$, $LiSbF_6$, $LiAsF_6$, LiSOsCFs, $LiN(SO_2CF_3)_2$, $LiN(SO_2C_2F_5)_2$, $LiN(SO_2CF_3)(SO_2C_4F_9)$, $LiC(SO_2CF_3)_3$, or the like. One or two or more lithium salts selected from the above lithium salts can be used. Moreover, the polymer solid electrolyte that can be included in the first solid electrolyte 104 may be gelled by including an organic solvent.

The complex hydride solid electrolyte that can be used is, for example, $LiBH_4$-Lil or $LiBH_4$-$P_2S_5$.

The first solid electrolyte 104 may be a mixture of two or more selected from the group consisting of a halide solid electrolyte, a sulfide solid electrolyte, an oxide solid electrolyte, a polymer solid electrolyte, and a complex hydride solid electrolyte. For example, the first solid electrolyte 104 may be a mixture of a halide solid electrolyte and an oxide solid electrolyte. The first solid electrolyte 104 may be a mixture of a sulfide solid electrolyte and an oxide solid electrolyte.

The shape of the first solid electrolyte 104 according to Embodiment 1 is not particularly limited. The shape of the first solid electrolyte 104 may be, for example, acicular, spherical, or ellipsoidal. The shape of the first solid electrolyte 104 may be, for example, particulate.

For example, in the case where the shape of the first solid electrolyte 104 is particulate (e.g., spherical), the first solid electrolyte 104 may have a median diameter of 100 $\mu$m or less. In the case where the first solid electrolyte 104 has a median diameter of 100 $\mu$m or less, the coated positive electrode active material 103 and the first solid electrolyte 104 can form a favorable dispersion state in the positive electrode material 1000. This enhances the charge and discharge characteristics of a battery.

The first solid electrolyte 104 may have a median diameter of 10 $\mu$m or less or 1 $\mu$m or less. According to the above configuration, the coated positive electrode active material 103 and the first solid electrolyte 104 can form a favorable dispersion state in the positive electrode material 1000.

The first solid electrolyte 104 may have a smaller median diameter than the coated positive electrode active material 103 has. According to the above configuration, the first solid electrolyte 104 and the coated positive electrode active material 103 can form a more favorable dispersion state in the positive electrode material 1000.

The coated positive electrode active material 103 may have a median diameter of 0.1 $\mu$m or more and 100 $\mu$m or less. In the case where the coated positive electrode active material 103 has a median diameter of 0.1 $\mu$m or more, the coated positive electrode active material 103 and the first solid electrolyte 104 can form a favorable dispersion state in the positive electrode material 1000. This enhances the charge and discharge characteristics of a battery. In the case where the coated positive electrode active material 103 has a median diameter of 100 $\mu$m or less, a sufficient diffusion rate of lithium in the coated positive electrode active material 103 is ensured. This enables a battery to operate at a high output.

The coated positive electrode active material 103 may have a larger median diameter than the first solid electrolyte 104 has. In this case, the coated positive electrode active material 103 and the first solid electrolyte 104 can form a favorable dispersion state.

In the present disclosure, the median diameter means the particle diameter (d50) at a cumulative volume equal to 50% in the volumetric particle size distribution. The volumetric particle size distribution is measured, for example, with a laser diffraction analyzer or an image analyzer.

In the positive electrode material 1000 according to Embodiment 1, the first solid electrolyte 104 and the coated positive electrode active material 103 may be in contact with each other. In this case, the coating layer 102 and the positive electrode active material 101 are in contact with each other.

The positive electrode material 1000 according to Embodiment 1 may include a plurality of particles of the first solid electrolyte 104 and a plurality of particles of the coated positive electrode active material 103.

In the positive electrode material 1000 according to Embodiment 1, the content of the first solid electrolyte 104 and the content of the coated positive electrode active material 103 may be the same or different from each other.

<Method of manufacturing positive electrode material>

The coated positive electrode active material 103 and the first solid electrolyte 104 are mixed together to obtain the positive electrode material 1000. The method of mixing together the coated positive electrode active material 103 and the first solid electrolyte 104 is not particularly limited. For example, an implement such as a mortar may be used to mix together the coated positive electrode active material 103 and the first solid electrolyte 104, or a mixer such as a ball mill may be used to mix together the coated positive electrode active material 103 and the first solid electrolyte 104. The mixing ratio of the coated positive electrode active material 103 and the first solid electrolyte 104 is not particularly limited.

(Embodiment 2)

Embodiment 2 will be described below. The description overlapping that in Embodiment 1 will be omitted as appropriate.

FIG. 2 is a cross-sectional view schematically showing the configuration of a battery 2000 according to Embodiment 2.

The battery 2000 according to Embodiment 2 includes a positive electrode 201, an electrolyte layer 202, and a negative electrode 203. The positive electrode 201 includes the positive electrode material 1000 according to Embodiment 1. The electrolyte layer 202 is disposed between the positive electrode 201 and the negative electrode 203.

According to the above configuration, it is possible to achieve both the thermal stability of the positive electrode and a low interfacial resistance of the positive electrode.

In the volume ratio "v1:100 - v1" between the coated positive electrode active material 103 and the first solid electrolyte 104 included in the positive electrode 201, $30 \leq v1 \leq 95$ may be satisfied. Here, v1 represents the volume ratio of the coated positive electrode active material 103 based on 100 of the total volume of the coated positive electrode active material 103 and the first solid electrolyte 104 included in the positive electrode 201. In the case where $30 \leq v1$ is satisfied, a sufficient energy density of the battery 2000 can be ensured. In the case where $v1 \leq 95$ is satisfied, the battery 2000 can operate at a high output.

The positive electrode 201 may have a thickness of 10 $\mu$m or more and 500 $\mu$m or less. In the case where the positive electrode 201 has a thickness of 10 $\mu$m or more, a sufficient energy density of the battery 2000 can be ensured.

In the case where the positive electrode 201 has a thickness of 500 $\mu$m or less, the battery 2000 can operate at a high output.

The electrolyte layer 202 is a layer including an electrolyte. The electrolyte is, for example, a solid electrolyte. The solid electrolyte included in the electrolyte layer 202 is defined as a second solid electrolyte. That is, the electrolyte layer 202 may include a second solid electrolyte layer.

The second solid electrolyte that may be used is any of the solid electrolytes described according to Embodiment 1. That is, the second solid electrolyte that may be used is a halide solid electrolyte, a sulfide solid electrolyte, an oxide solid electrolyte, a polymer solid electrolyte, or a complex hydride solid electrolyte. According to the above configuration, the output density and the charge and discharge characteristics of the battery 2000 can be further enhanced.

The electrolyte layer 202 may include the second solid electrolyte as its main component. That is, the electrolyte layer 202 may include the second solid electrolyte, for example, in a mass proportion of 50% or more (i.e., 50 mass% or more) to the entire electrolyte layer 202. According to the above configuration, the charge and discharge efficiency of the battery 2000 can be further enhanced.

The electrolyte layer 202 may include the second solid electrolyte in a mass proportion of 70% or more (i.e., 70 mass% or more) to the entire electrolyte layer 202. According to the above configuration, the charge and discharge efficiency of the battery 2000 can be further enhanced.

The electrolyte layer 202 may include the second solid electrolyte as its main component and further include inevitable impurities, or a starting material for use in synthesizing the second solid electrolyte, a by-product, a decomposition product, etc.

The electrolyte layer 202 may include the second solid electrolyte, for example, in a mass proportion of 100% (i.e., 100 mass%) to the entire electrolyte layer 202, except for inevitably incorporated impurities. According to the above configuration, the charge and discharge efficiency of the battery 2000 can be further enhanced.

As described above, the electrolyte layer 202 may be composed only of the second solid electrolyte.

The electrolyte layer 202 may include two or more of the materials listed as the second solid electrolyte. For example, the electrolyte layer 202 may include a halide solid electrolyte and a sulfide solid electrolyte.

The electrolyte layer 202 may have a stacked structure of a first electrolyte layer and a second electrolyte layer. The second solid electrolyte included in the first electrolyte layer and the second solid electrolyte included in the second electrolyte layer may be different in composition from each other. For example, the second solid electrolyte included in the first electrolyte layer may be a halide solid electrolyte, and the second solid electrolyte included in the second electrolyte layer may be a sulfide solid electrolyte. In this case, the first electrolyte layer may be disposed so as to be in contact with the positive electrode 201 and the second electrolyte layer may be disposed so as to be in contact with the negative electrode 203. According to the above configuration, it is possible to enhance the thermal stability, the output characteristics, and the energy density of the battery 2000.

The electrolyte layer 202 may have a thickness of 1 $\mu$m or more and 300 $\mu$m or less. In the case where the electrolyte layer 202 has a thickness of 1 $\mu$m or more, the positive electrode 201 and the negative electrode 203 are less prone to be short-circuited. In the case where the electrolyte layer 202 has a thickness of 300 $\mu$m or less, the battery 2000 can operate at a high output.

The negative electrode 203 includes a material having properties of occluding and releasing metal ions (e.g., lithium ions). The negative electrode 203, for example, includes a negative electrode active material.

The negative electrode active material that can be used is a metal material, a carbon material, an oxide, a nitride, a tin compound, a silicon compound, or the like.

The metal material may be a simple substance of metal. The metal material may be an alloy. Examples of the metal material include lithium metal and a lithium alloy. Examples of the carbon material include natural graphite, coke, partially graphitized carbon, a carbon fiber, spherical carbon, artificial graphite, and amorphous carbon. In the case where silicon (Si), tin (Sn), a silicon compound, a tin compound, or the like is used, the capacity density can be enhanced.

The negative electrode 203 may include a solid electrolyte. The solid electrolyte that may be used is any of the solid electrolytes described in Embodiment 1. According to the above configuration, the lithium-ion conductivity inside the negative electrode 203 is enhanced, and consequently the battery 2000 can operate at a high output.

The shape of the negative electrode active material according to Embodiment 2 is not particularly limited. The shape of the negative electrode active material may be, for example, acicular, spherical, or ellipsoidal. The shape of the negative electrode active material may be, for example, particulate.

The shape of the solid electrolyte included in the negative electrode 203 according to Embodiment 2 is not particularly limited. The shape of the solid electrolyte included in the negative electrode 203 may be, for example, acicular, spherical, or ellipsoidal. The shape of the solid electrolyte included in the negative electrode 203 may be, for example, particulate.

In the case where the shape of the solid electrolyte included in the negative electrode 203 is particulate (e.g., spherical), the solid electrolyte may have a median diameter of 100 $\mu$m or less. In the case where the solid electrolyte has a median diameter of 100 $\mu$m or less, the negative electrode active material and the solid electrolyte can form a favorable dispersion state in the negative electrode 203. This enhances the charge and discharge characteristics of the battery 2000.

The solid electrolyte included in the negative electrode 203 may have a median diameter of 10 $\mu$m or less or 1 $\mu$m or less. According to the above configuration, the negative electrode active material and the solid electrolyte can form a favorable dispersion state in the negative electrode 203.

The solid electrolyte included in the negative electrode 203 may have a smaller median diameter than the negative electrode active material has. According to the above configuration, the negative electrode active material and the solid electrolyte can form a more favorable dispersion state in the negative electrode 203.

The negative electrode active material may have a median diameter of 0.1 $\mu$m or more and 100 $\mu$m or less. In the case where the negative electrode active material has a median diameter of 0.1 $\mu$m or more, the negative electrode active material and the solid electrolyte can form a favorable dispersion state in the negative electrode 203. This enhances the charge and discharge characteristics of the battery 2000. In the case where the negative electrode active material has a median diameter of 100 $\mu$m or less, a sufficient diffusion rate of lithium in the negative electrode active material is ensured. This enables the battery 2000 to operate at a high output.

The negative electrode active material may have a larger median diameter than the solid electrolyte included in the negative electrode 203 has. In this case, the negative electrode active material and the solid electrolyte can form a favorable dispersion state.

In the volume ratio "v2:100 - v2" between the negative electrode active material and the solid electrolyte included in the negative electrode 203, $30 \leq v2 \leq 95$ may be satisfied. Here, v2 represents the volume ratio of the negative electrode active material based on 100 of the total volume of the negative electrode active material and the solid electrolyte included in the negative electrode 203. In the case where $30 \leq v2$ is satisfied, a sufficient energy density of the battery 2000 can be ensured. In the case where $v2 \leq 95$ is satisfied, the battery 2000 can operate at a high output.

The negative electrode 203 may have a thickness of 10 $\mu$m or more and 500 $\mu$m or less. In the case where the negative electrode 203 has a thickness of 10 $\mu$m or more, a sufficient energy density of the battery 2000 can be ensured. In the case where the negative electrode 203 has a thickness of 500 $\mu$m or less, the battery 2000 can operate at a high output.

At least one selected from the group consisting of the positive electrode 201, the electrolyte layer 202, and the negative electrode 203 may include a binder for the purpose of enhancing the adhesion between the particles. The binder is used to enhance the binding properties of the materials constituting the electrodes. Examples of the binder include polyvinylidene fluoride, polytetrafluoroethylene, polyethylene, polypropylene, an aramid resin, a polyamide, a polyimide, a polyamideimide, polyacrylonitrile, a polyacrylic acid, polyacrylic acid methyl ester, polyacrylic acid ethyl ester, polyacrylic acid hexyl ester, a polymethacrylic acid, polymethacrylic acid methyl ester, polymethacrylic acid ethyl ester, polymethacrylic acid hexyl ester, polyvinyl acetate, polyvinylpyrrolidone, a polyether, a polyethersulfone, hexafluoropolypropylene, styrenebutadiene rubber, and carboxymethyl cellulose. Moreover, the binder that can be used is also a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, an acrylic acid, and hexadiene. Furthermore, the binder that may be used is a mixture of two or more materials selected from the above materials.

At least one selected from the group consisting of the positive electrode 201 and the negative electrode 203 may include a conductive additive for the purpose of enhancing the electronic conductivity. The conductive additive that can be used is, for example, graphite, such as natural graphite or artificial graphite, carbon black, such as acetylene black or Ketjenblack, a conductive fiber, such as a carbon fiber or a metal fiber, fluorinated carbon, a metal powder, such as an aluminum powder, a conductive whisker, such as a zinc oxide whisker or a potassium titanate whisker, a conductive metal oxide, such as titanium oxide, or a conductive polymer compound, such as a polyaniline compound, a polypyrrole compound, or a polythiophene compound. Using a carbon conductive additive can seek a cost reduction.

Examples of the shape of the battery 2000 according to Embodiment 2 include a coin type, a cylindrical type, a prismatic type, a sheet type, a button type, a flat type, and a stacked type.

Examples

The details of the present disclosure will be described below with reference to examples and comparative examples.

[Production of sulfide solid electrolyte]

In an argon glove box with a dew point of -60°C or lower, raw material powders $Li_2S$ and $P_2S_5$ were weighed in a molar ratio of $Li_2S:P_2S_5$ = 75:25. The raw material powders were pulverized for mixing together in a mortar. Subsequently, the mixture thus obtained was subjected to a milling process with a planetary ball mill (Type P-7 manufactured by Fritsch GmbH) at 510 rpm for 10 hours. Thus, a glassy solid electrolyte was obtained. The glassy solid electrolyte obtained was heat-treated at 270°C for 2 hours in an inert atmosphere. Thus, a glass-ceramic sulfide solid electrolyte $Li_2S$-$P_2S_5$ was obtained.

[Production of halide solid electrolyte]

In an argon glove box with a dew point of -60°C or lower, raw material powders LiBr, YBrs, LiCl, and $YCl_3$ were weighed in a molar ratio of $LiBr:YBr_3:LiCl:YCl_3$ = 1:1:5:1. Subsequently, a milling process was performed with a planetary ball mill (Type P-7 manufactured by Fritsch GmbH) at 600 rpm for 25 hours. Thus, a powdery halide solid electrolyte $Li_3YBr_2Cl_4$ was obtained.

<<Example 1>>

[Production of coated positive electrode active material]

The positive electrode active material used was $Li(NiCoAl)O_2$ (hereinafter, referred to as NCA). The coating materials used were the sulfide solid electrolyte produced and the halide solid electrolyte produced. In an argon glove box, NCA, the sulfide solid electrolyte, and the halide solid electrolyte were weighed in a volume ratio of 90:8:2. These materials were put into a dry particle composing machine (NOBILTA manufactured by Hosokawa Micron Corporation) and subjected to a composing process at 6500 rpm for 30 minutes. Thus, a coating layer consisting of a mixture of the sulfide solid electrolyte and the halide solid electrolyte was formed on each of the surfaces of the NCA particles. Through such a method, a coated positive electrode active material of Example 1 was obtained.

[Production of positive electrode material]

The coated positive electrode active material produced and the halide solid electrolyte produced were weighed in a volume ratio of 100:20. That is, the first solid electrolyte used in Example 1 was the halide solid electrolyte. These were mixed together in an agate mortar to produce a positive electrode material according to Example 1.

[Production of battery]

A conductive additive was weighed in a mass ratio of the positive electrode active material included in the positive electrode material:the conductive additive = 100:1.5. Furthermore, a binder was weighed in a mass ratio of the positive electrode active material included in the positive electrode material:the binder = 100:0.5. Tetralin was added as the solvent and an ultrasonic disperser was used for mixing together to obtain a slurry including the positive electrode material. This slurry was applied onto a positive electrode current collector made of aluminum and dried to produce a positive electrode of Example 1.

The negative electrode active material used was $L_{14}Ti_5O_{12}$. The negative electrode active material and the sulfide solid electrolyte were weighed in a volume ratio of 65:25. These were mixed together in an agate mortar to produce a negative electrode material according to Example 1. The negative electrode material produced was used to produce a negative electrode of Example 1 by the same method as the method for the positive electrode.

Between the positive electrode and negative electrode produced, an electrolyte layer was disposed and these were pressure-molded. Current collector leads were attached to a stack composed of the positive electrode, the electrolyte layer, and the negative electrode. Then, the stack was put into a laminate package and the package is sealed. Thus, a battery of Example 1 was obtained.

«Example 2»

In the coated positive electrode active material producing step, NCA, the sulfide solid electrolyte, and the halide solid electrolyte were weighed in a volume ratio of 90:6:4. In the same manner as in Example 1 except this step, a battery of Example 2 was obtained.

«Example 3»

In the coated positive electrode active material producing step, NCA, the sulfide solid electrolyte, and the halide solid electrolyte were weighed in a volume ratio of 90:4:6. In the same manner as in Example 1 except this step, a battery of Example 3 was obtained.

<<Comparative Example 1>>

In the coated positive electrode active material producing step, NCA, the sulfide solid electrolyte, and the halide solid electrolyte were weighed in a volume ratio of 90:10:0. That is, the coating material of Comparative Example 1 was free of the halide solid electrolyte. In the same manner as in Example 1 except this step, a battery of Comparative Example 1 was obtained.

«Example 4»

In the positive electrode material producing step, the coated positive electrode active material produced and the sulfide solid electrolyte produced were weighed in a volume ratio of 100:20. That is, the sulfide solid electrolyte used in Example 4 was the first solid electrolyte. In the same manner as in Example 1 except this step, a battery of Example 4 was obtained.

«Example 5»

In the coated positive electrode active material producing step, NCA, the sulfide solid electrolyte, and the halide solid electrolyte were weighed in a volume ratio of 90:6:4. In the same manner as in Example 4 except this step, a battery of Example 5 was obtained.

«Example 6»

In the coated positive electrode active material producing step, NCA, the sulfide solid electrolyte, and the halide solid electrolyte were weighed in a volume ratio of 90:4:6. In the same manner as in Example 4 except this step, a battery of Example 6 was obtained.

<<Comparative Example 2»

In the coated positive electrode active material producing step, NCA, the sulfide solid electrolyte, and the halide solid electrolyte were weighed in a volume ratio of 90:10:0. That is, the coating material of Comparative Example 2 was free of the halide solid electrolyte. In the same manner as in Example 4 except this step, a battery of Comparative Example 2 was obtained.

(Battery resistance measurement)

The interfacial resistance proportion of each of the batteries produced was calculated by the following procedure.
The battery produced was placed in a thermostatic chamber set at 25°C. Constant-current charge was performed to a voltage of 2.7 V at a current value of 0.2 mA equivalent to 0.1 C rate (10-hour rate) relative to the theoretical capacity of the battery. Then, constant-voltage charge was performed to a current value of 0.02 mA equivalent to 0.01 C rate at a voltage of 2.7 V. Thereafter, constant-current discharge was performed to a voltage of 1.5 V at a current value of 0.667 mA equivalent to 1/3 C rate (3.3-hour rate). Then, constant-voltage discharge was performed to 0.01 C rate at a voltage of 1.5 V.
Thereafter, charge was performed again under the same conditions, and constant-current discharge was performed to a voltage of 2.15 V at 1/3 C rate. Then, constant-voltage discharge was performed to 0.01 C rate at a voltage of 2.15 V. Furthermore, after a pause, constant-current discharge was performed for 10 seconds at a current value of 8 mA. The direct current resistance of the battery calculated by the following equation (3) is referred to as DCR.

$$DCR = (V_o - V) \times S/I \ldots (3)$$

Here, $V_o$ represents the voltage before the 10-second discharge. V represents the voltage after the 10-second discharge. S represents the contact area between the positive electrode and the electrolyte layer. I represents the current value, specifically, 8 mA.
As for the batteries of Examples 1 to 3 and Comparative Example 1, Table 1 shows the DCR proportion based on the DCR calculated by the above equation (3) together with the volume proportion (%) of the halide solid electrolyte to the coating layer. As for the batteries of Examples 4 to 6 and Comparative Example 2, Table 2 shows the DCR proportion based on the DCR calculated by the above equation (3) together with the volume proportion (%) of the halide solid electrolyte to the coating layer. The DCR proportion in Table 1 is the value normalized based on 100 of the DCR of the battery of Comparative Example 1. The DCR proportion in Table 2 is the value normalized based on 100 of the DCR of the battery of Comparative Example 2. The DCR represents the internal resistance of the battery. Since the internal resistance of the battery consists mostly of the interfacial resistance, the DCR proportion substantially represents the interfacial resistance proportion.

(Heating value measurement)

The positive electrode produced in the battery production step was used to measure the heating value of the charged positive electrode by the following procedure.

First, 80 mg of a sulfide solid electrolyte $Li_2S-P_2S_5$ was put into an insulating outer cylinder. This material was pressure-molded at a pressure of 360 MPa to obtain an electrolyte layer. Next, metal Li was put. This material was pressure-molded at a pressure of 80 MPa to prepare a negative electrode formed of metal Li. Next, the positive electrode was put on one side of the electrolyte layer opposite to the other side in contact with metal Li. Thus, a stack including the positive electrode, the electrolyte layer, and the negative electrode in this order was obtained. Current collectors made of stainless steel were placed on the top and the bottom of the stack obtained, and current collector leads were attached to the current collectors. Finally, an insulating ferrule was used to block the inside of the insulating outer cylinder from the outside air atmosphere and hermetically seal the insulating outer cylinder. Thus, a battery was produced.

The battery produced was placed in a thermostatic chamber at 25°C. Constant-current charge was performed to reach 4.2 V, and then constant-voltage charge was performed to fall below a current value equivalent to 0.01 C. The charged battery was disassembled to take out the positive electrode. The positive electrode taken out was sealed in a sealed pan made of SUS, and the heating value was measured with a differential scanning calorimeter (DSC-6200 manufactured by Seiko Instruments Inc.). The temperature rise rate was set to 10°C/min, and the scanning temperature range was set to a range from room temperature to 500°C. A temperature at which the heating value had exceeded a predetermined value was measured as the exothermic onset temperature (°C). The predetermined heating value is not unambiguously determined because it varies depending on the sample weight, the type of the differential scanning calorimeter to be used, the volume of the sealed pan, the temperature rise rate, etc. In an example, the predetermined heating value is a heating value that is observed at a temperature of 100°C or higher, is obviously higher than the heating value of the background, and leads to the initial heating peak. Within this range, the effect of enhancing the heat resistance of the battery according to the present disclosure can be sufficiently confirmed.

Table 1 shows the measurement results of the exothermic onset temperature (°C) for the batteries of Examples 1 to 3 and Comparative Example 1. Table 2 shows the measurement results of the exothermic onset temperature (°C) for the batteries of Examples 4 to 6 and Comparative Example 2.

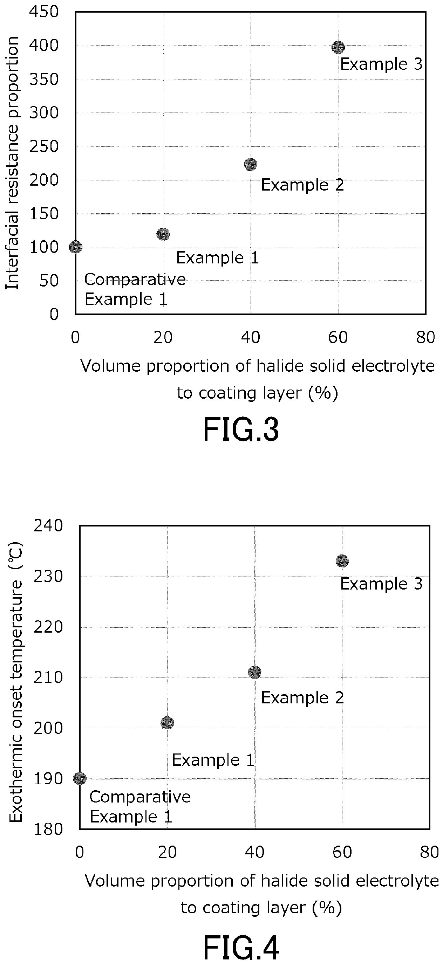

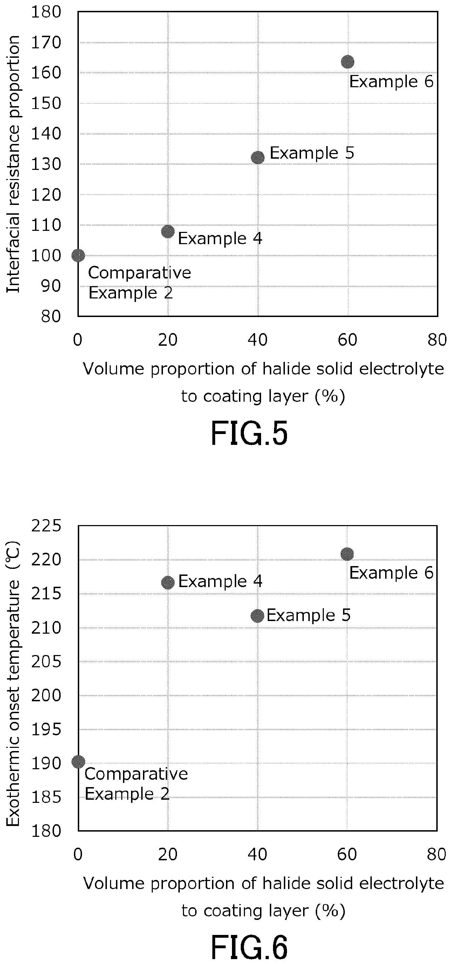

FIG. 3 and FIG. 4 are graphic representation of the results in Table 1. FIG. 5 and FIG. 6 are graphic representation of the results in Table 2. FIG. 3 is a graph showing the measurement results of the resistance for the batteries of Examples 1 to 3 and Comparative Example 1. FIG. 5 is a graph showing the measurement results of the resistance for the batteries of Examples 4 to 6 and Comparative Example 2. In each of FIG. 3 and FIG. 5, the vertical axis represents the interfacial resistance proportion, and the horizontal axis represents the volume proportion of the halide solid electrolyte to the coating layer. FIG. 4 is a graph showing the measurement results of the exothermic onset temperature for the batteries of Examples 1 to 3 and Comparative Example 1. FIG. 6 is a graph showing the measurement results of the exothermic onset temperature for the batteries of Examples 4 to 6 and Comparative Example 2. In each of FIG. 4 and FIG. 6, the vertical axis represents the exothermic onset temperature, and the horizontal axis represents the volume proportion of the halide solid electrolyte to the coating layer.

[Table 1]

|  | Volume proportion of halide solid electrolyte to coating layer (%) | Interfacial resistance proportion | Exothermic onset temperature (°C) |
|---|---|---|---|
| Example 1 | 20 | 119 | 201 |
| Example 2 | 40 | 223 | 211 |
| Example 3 | 60 | 397 | 233 |
| Comparative Example 1 | 0 | 100 | 190 |

[Table 2]

|  | Volume proportion of halide solid electrolyte to coating layer (%) | Interfacial resistance proportion | Exothermic onset temperature (°C) |
|---|---|---|---|
| Example 4 | 20 | 108 | 217 |
| Example 5 | 40 | 132 | 212 |
| Example 6 | 60 | 164 | 221 |
| Comparative Example 2 | 0 | 100 | 190 |

<<Consideration>>

The measurement results indicate a rising tendency of the exothermic onset temperature along with an increase in the volume proportion of the halide solid electrolyte to the coating layer in the coated positive electrode active material.

In the case where the positive electrode active material included in the positive electrode contains oxygen, the structure of the positive electrode active material becomes unstable along with charge. Consequently, oxygen is easily released from the positive electrode active material. As compared with sulfide solid electrolytes, halide solid electrolytes have an excellent thermal stability, a low reactivity to oxygen released from the positive electrode active material, and a low amount of heat generated by an oxidation reaction. Accordingly, in the case where the positive electrode includes a sulfide solid electrolyte and a halide solid electrolyte, a higher volume proportion of the halide solid electrolyte further enhances the thermal stability of the positive electrode. In particular, it is important to suppress the reactivity of the solid electrolyte in the vicinity of the positive electrode active material. The exothermic onset temperature is considered to have been significantly increased along with an increase in the volume proportion of the halide solid electrolyte to the coating layer in the coated positive electrode active material.

On the other hand, the interfacial resistance proportion was increased along with an increase in the volume proportion of the halide solid electrolyte to the coating layer in the coated positive electrode active material.

Sulfide solid electrolytes typically have a low Young's modulus and a high deformability as compared with halide solid electrolytes. Accordingly, in a positive electrode including a sulfide solid electrolyte, a close contact between the positive electrode active material and the sulfide solid electrolyte achieves a low interfacial resistance. In a positive electrode including a sulfide solid electrolyte and a halide solid electrolyte, a higher volume proportion of the sulfide solid electrolyte, that is, a lower volume proportion of the halide solid electrolyte is considered to achieve a lower interfacial resistance. By increasing the volume proportion of the halide solid electrolyte to the coating layer, the thermal stability of the positive electrode can be enhanced.

From the above consideration, using the coated positive electrode active materials of Examples 1 to 6 was able to achieve both the thermal stability of the positive electrode and a low interfacial resistance of the positive electrode.

As demonstrated by Examples 1 to 6, the coated positive electrode active material, in which the volume proportion of the halide solid electrolyte to the coating layer was 60% or less, was able to achieve both the thermal stability of the positive electrode and a low interfacial resistance of the positive electrode.

As demonstrated by Examples 1 and 2, in the use case of the halide solid electrolyte as the first solid electrolyte, the coated positive electrode active material, in which the volume proportion of the halide solid electrolyte to the coating layer was 40% or less, was able to further reduce the interfacial resistance of the positive electrode while maintaining a high thermal stability of the positive electrode. As demonstrated by Examples 4 and 5, in the use case of the sulfide solid electrolyte as the first solid electrolyte, the coated positive electrode active material, in which the volume proportion of the halide solid electrolyte to the coating layer was 40% or less, was able to further reduce the interfacial resistance of the positive electrode while maintaining a high thermal stability of the positive electrode.

As demonstrated by Example 1, in the use case of the halide solid electrolyte as the first solid electrolyte, the coated positive electrode active material, in which the volume proportion of the halide solid electrolyte to the coating layer was even 20%, was able to achieve a higher exothermic onset temperature by at least 10°C than that of Comparative Example 1 including the coating layer free of the halide solid electrolyte. As demonstrated by Example 4, in the use case of the sulfide solid electrolyte as the first solid electrolyte, the coated positive electrode active material, in which the volume proportion of the halide solid electrolyte to the coating layer was even 20%, was able to achieve a higher exothermic onset temperature by at least 25°C than that of Comparative Example 2 including the coating layer free of the halide solid electrolyte.

INDUSTRIAL APPLICABILITY

The battery of the present disclosure can be used as, for example, an all-solid-state lithium secondary battery.

REFERENCE SIGNS LIST

    1000 positive electrode material
    101 positive electrode active material
    102 coating layer
    103 coated positive electrode active material
    104 first solid electrolyte
    2000 battery
    201 positive electrode
    202 electrolyte layer
    203 negative electrode

**Claims**

1. A coated positive electrode active material comprising:

    a positive electrode active material; and
    a coating layer coating at least a portion of a surface of the positive electrode active material, wherein
    the coating layer comprises a sulfide solid electrolyte and a halide solid electrolyte.

2. The coated positive electrode active material according to claim 1, wherein
   a proportion of a volume of the halide solid electrolyte to a volume of the coating layer is 60% or less.

3. The coated positive electrode active material according to claim 1 or 2, wherein
   a proportion of a volume of the halide solid electrolyte to a volume of the coating layer is 40% or less.

4. The coated positive electrode active material according to any one of claims 1 to 3, wherein

   the halide solid electrolyte is represented by the following composition formula (1)

$$Li_\alpha M_\beta X_\gamma \ ... \qquad \text{Formula (1)}$$

   where $\alpha$, $\beta$, and $\gamma$ are each independently a value greater than 0,
   M comprises at least one element selected from the group consisting of metalloid elements and metal elements except Li, and
   X comprises at least one selected from the group consisting of F, Cl, Br, and I.

5. The coated positive electrode active material according to claim 4, wherein
   the composition formula (1) satisfies $2.5 \le \alpha \le 3$, $1 \le \beta \le 1.1$, and $\gamma = 6$.

6. The coated positive electrode active material according to claim 4 or 5, wherein in the composition formula (1), M comprises yttrium.

7. The coated positive electrode active material according to any one of claims 1 to 6, wherein
   the coating layer is a single layer.

8. The coated positive electrode active material according to any one of claims 1 to 7, wherein
   the coating layer comprises a mixture of the sulfide solid electrolyte and the halide solid electrolyte.

9. A positive electrode material comprising:

the coated positive electrode active material according to any one of claims 1 to 8; and
a first solid electrolyte.

**10.** The positive electrode material according to claim 9, wherein
the first solid electrolyte comprises at least one selected from the group consisting of a halide solid electrolyte, a sulfide solid electrolyte, an oxide solid electrolyte, a polymer solid electrolyte, and a complex hydride solid electrolyte.

**11.** A battery comprising:

a positive electrode comprising the positive electrode material according to claim 9 or 10;
a negative electrode; and
an electrolyte layer provided between the positive electrode and the negative electrode.

EP 4 343 886 A1

FIG.1

FIG.2

20

FIG.3

FIG.4

FIG.5

FIG.6

**EP 4 343 886 A1**

## INTERNATIONAL SEARCH REPORT

International application No.

**PCT/JP2022/012909**

### A. CLASSIFICATION OF SUBJECT MATTER

*H01M 4/36*(2006.01)i; *H01M 4/525*(2010.01)i; *H01M 4/62*(2006.01)i
FI:　H01M4/36 C; H01M4/62 Z; H01M4/525

According to International Patent Classification (IPC) or to both national classification and IPC

### B. FIELDS SEARCHED

Minimum documentation searched (classification system followed by classification symbols)

H01M4/36; H01M4/525; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2015-201372 A (IDEMITSU KOSAN CO) 12 November 2015 (2015-11-12) paragraphs [0011]-[0020], [0037]-[0047], [0067]-[0070] | 1-3, 7-11 |
| A | | 4-6 |
| A | JP 2020-98767 A (PROLOGIUM TECHNOLOGY CO., LTD.) 25 June 2020 (2020-06-25) | 1-11 |
| A | WO 2019/146216 A1 (PANASONIC IP MAN CO LTD) 01 August 2019 (2019-08-01) | 1-11 |
| A | WO 2019/146236 A1 (PANASONIC IP MAN CO LTD) 01 August 2019 (2019-08-01) | 1-11 |

☐ Further documents are listed in the continuation of Box C.　　☑ See patent family annex.

| | |
|---|---|
| *　Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 May 2022** | **24 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/012909**

| Patent document cited in search report | | | Publication date (day/month/year) | Patent family member(s) | | | Publication date (day/month/year) |
|---|---|---|---|---|---|---|---|
| JP | 2015-201372 | A | 12 November 2015 | (Family: none) | | | |
| JP | 2020-98767 | A | 25 June 2020 | US | 2020/0144607 | A1 | |
| | | | | EP | 3651251 | A1 | |
| | | | | TW | 202019004 | A | |
| | | | | KR | 10-2082616 | B1 | |
| WO | 2019/146216 | A1 | 01 August 2019 | US | 2020/0350623 | A1 | |
| | | | | EP | 3745500 | A1 | |
| | | | | CN | 111566852 | A | |
| WO | 2019/146236 | A1 | 01 August 2019 | US | 2020/0350626 | A1 | |
| | | | | EP | 3745499 | A1 | |
| | | | | CN | 111566851 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007004590 A1
- WO 2018025582 A1